# EUROPEAN PATENT APPLICATION

(11) **EP 3 029 540 A1**
(43) Date of publication of application: **08.06.2016**
(21) Application number: 15194711.6
(22) Date of filing: 16.11.2015
(51) Int. Cl.: G05D 23/30

(54) **THERMOSTAT, WATER HEATER INCLUDING THE THERMOSTAT, AND METHOD OF CONTROLLING THE TEMPERATURE OF WATER IN A WATER TANK OF THE WATER HEATER**

(30) Priority: 20.11.2014 US 201462082409 P
(71) Applicant: Bradford White Corporation, Middleville, MO 49333 (US)
(72) Inventor: Hill, Bruce, Middleville, MO 49333 (US)
(74) Representative: Scheele, Friedrich

(57) **Abstract**

A thermostat including bi-metal element configured to be activated at a maximum dial setpoint temperature manually set on the thermostat and a switch coupled to the bi-metal element and configured to open upon activation of the bi-metal element. The thermostat also includes a temperature sensor positioned to sense temperature, a thermostat heating element positioned to heat the bi-metal element to the maximum dial setpoint temperature, and a controller coupled to the temperature sensor and the thermostat heating element and storing a desired controller setpoint temperature. In response to determining that the desired controller setpoint temperature is sensed, the controller controls the thermostat heating element to heat the bi-metal element to the maximum dial setpoint temperature, thereby activating the bi-metal element and opening the switch.

## Description

### Field

This invention relates generally to thermostats, water heaters including thermostats, and methods of controlling the temperature of water in a water tank of a water heater.

### Background

In operation of conventional water heaters (e.g. electric water heaters), cold water fed into the tank is heated by one or more electric elements inside the tank that get hot when turned ON. The electric elements are controlled by thermostats mounted to the side wall of the tank, which monitor the side wall's temperature that generally corresponds to the water temperature in the tank.

When the water is too cold, the thermostats turn the electric elements ON. When the water is too hot, the thermostats turn the electric elements OFF. In general, the thermostats cycle the electric elements ON and OFF over time to maintain the water in the tank at a constant desired temperature. While improvements in such thermostats have been proposed over the years, there remains a need for thermostat designs that are improved in terms of at least one of performance, cost, and ease of use.

### Brief Description of the Drawings

The drawing figures depict one or more implementations in accord with the present teachings, by way of example only, not by way of limitation. In the figures, like reference numerals refer to the same or similar elements.
FIG. 1 shows a water heater with upper and lower sidewall thermostats.
FIG. 2 shows a block diagram of the sidewall thermostat having two thermostat heating elements (switch closed) controlled by a controller.
FIG. 3 shows another block diagram of the sidewall thermostat having two thermostat heating elements (switch opened) controlled by the controller.
FIG. 4 shows a block diagram of the sidewall thermostat having one thermostat heating element (switch closed) controlled by a controller.
FIG. 5 shows another block diagram of the sidewall thermostat having one thermostat heating element (switch opened) controlled by the controller.
FIG. 6 shows a block diagram of the internal components of the controller.
FIG. 7 shows a block diagram of water heaters communicating over a network.
FIG. 8 shows a flowchart explaining the general operation of the water heater.
FIG. 9 shows a flowchart explaining the operation of the thermostat controller to detect a status of the primary electric heating elements.
FIG. 10 shows a flowchart explaining the operation of the thermostat controller to determine appropriate power consumption for the thermostat heating element.
FIG. 11 shows a flowchart explaining the operation of the thermostat controller to protect the primary electric heating elements from damage during dry fire.

### Summary

A thermostat, the thermostat including a bi-metal element configured to be activated at a maximum dial setpoint temperature manually set on the thermostat, and a switch coupled to the bi-metal element and configured to open upon activation of the bi-metal element. The thermostat also including a temperature sensor positioned to sense temperature, a thermostat heating element positioned to heat the bi-metal element to the maximum dial setpoint temperature, and a controller coupled to the temperature sensor and the thermostat heating element, and storing a desired controller setpoint temperature. In response to determining that the desired controller setpoint temperature is sensed, the controller controls the thermostat heating element to heat the bi-metal element to the maximum dial setpoint temperature, thereby activating the bi-metal element and opening the switch.

In one embodiment, the thermostat heating element is at least one of a resistive heating element or an inductive heating element. In one embodiment, the thermostat includes a user input device coupled to the controller for setting the desired controller setpoint temperature. In one embodiment, the thermostat heating element is mounted within the thermostat at a predetermined location to assure optimal heating of the bi-metal element. In one embodiment, the thermostat temperature sensor is mounted within the thermostat at a predetermined location that reduces impact of heat generated by the heating element and increases ability to accurately sense side wall temperature of a water tank. In one embodiment there is at least one other thermostat heating element positioned to heat the bi-metal element to the maximum dial setpoint temperature. The thermostat heating element and the other thermostat heating element being configured to operate in conjunction to heat the bi-metal element to the maximum dial setpoint temperature. In one embodiment, the controller is configured to determine at least one of an operational status of primary electric heating elements in a hot water tank or operational efficiency of the thermostat heating elements.

A water heater including a water storage tank, a means for heating water within the water storage tank, and a thermostat coupled to the water heating means. The thermostat includes a bi-metal element configured to be activated at a maximum dial setpoint temperature manually set on the thermostat, a switch coupled to the bi-metal element and configured to open upon activation of the bi-metal element, a temperature sensor positioned to sense temperature of the water tank, a thermostat heating element positioned to heat the bi-metal element f to the maximum dial setpoint temperature, and a controller coupled to the temperature sensor and the thermostat heating element and storing a desired controller setpoint temperature of the water in the water tank. In response to determining that the desired controller setpoint temperature is sensed, the controller controls the thermostat heating element to heat the bi-metal element to the maximum dial setpoint temperature, thereby activating the bi-metal element and opening the electric switch to turn OFF the water heating means.

In one embodiment, the thermostat heating element is at least one of a resistive heating element or an inductive heating element. In one embodiment, the controller is mounted to the thermostat during manufacture of the thermostat. In one embodiment, the controller is mounted remote from the thermostat and is electrically coupled to the thermostat by electrical wires. In one embodiment, at least one other thermostat is coupled to at least one other water heating means. The at least one other thermostat includes another bi-metal element configured to be activated at the maximum dial setpoint temperature manually set on the at least one other thermostat, another switch coupled to the other bi-metal element and configured to open upon activation of the other bi-metal element, another temperature sensor positioned to sense temperature of the water tank, and another thermostat heating element positioned to heat the other bi-metal element to the maximum dial setpoint temperature,

In one embodiment, the controller is coupled to the other temperature sensor and the other thermostat heating element, and in response to determining that the desired controller setpoint temperature is sensed by the other sensor, the controller controls the other thermostat heating element to heat the other bi-metal element to the maximum dial setpoint temperature, thereby activating the other bi-metal element and opening the other switch to turn OFF the other water heating means. In one embodiment, the controller is configured to control a plurality of thermostats on a plurality of water heaters. In one embodiment, the controller is configured to turn ON the thermostat heating element to heat the bi-metal element to the maximum dial setpoint temperature, thereby activating the bi-metal element and opening the electric switch to turn OFF the water heating means when it is detected that the water heater is powered up for the first time, and then turn OFF the thermostat heating element when it is detected that the controller has received an instruction from a user indicating that water is in the water tank. In one embodiment, the water heating means includes one of an electric heating element, a fuel fired burner, and a heat exchanger.

A method for controlling the temperature of water in a water heater, including the steps of monitoring, by a sensor, temperature corresponding to temperature of the water in the water heater, actuating, by a controller, a thermostat heating element to heat a bi-metal element to a maximum dial setpoint temperature set on a thermostat that houses the bi-metal element when the sensor detects a desired controller setpoint temperature, opening, by the thermostat, a switch upon activation of the bi-metal element. In response to determining that the desired controller setpoint temperature is sensed, the controller controls the thermostat heating element to heat the bi-metal element to the maximum dial setpoint temperature set on the thermostat, thereby activating the bi-metal element and opening the switch to turn OFF the water heater.

In one embodiment, the method includes receiving, by a user input device, the desired controller setpoint temperature selected by the user. In one embodiment, the method includes determining, by the controller, an operational status of primary electric heating elements in the water heater based on a magnetic field induced on wires connected to the thermostat heating elements. In one embodiment, the method includes determining, by the controller, an efficiency of the thermostat heating elements, and controlling, by the controller, electric power supplied to the thermostat heating elements based on the determined efficiency.

In one embodiment, the method includes monitoring, by another sensor, temperature corresponding to temperature of the water in the water heater, actuating, by the controller, another thermostat heating element to heat another bi-metal element to another maximum dial setpoint temperature set on another thermostat that houses the other bi-metal element, and opening, by the other thermostat, another switch upon activation of the other bi-metal element. In response to determining that the desired controller setpoint temperature is sensed, the controller controls the other thermostat heating element to heat the other bi-metal element to the maximum dial setpoint temperature set on the other thermostat, thereby activating the other bi-metal element and opening the other switch to turn OFF the water heater.

In one embodiment, the method includes actuating, by the controller, the thermostat heating element to heat the bi-metal element to the maximum dial setpoint temperature set on the thermostat that houses the bi-metal element prior to the sensor sensing that the water in the water tank has reached the desired controller setpoint temperature.

### Detailed Description

In the following detailed description, numerous specific details are set forth by way of examples in order to provide a thorough understanding of the relevant teachings. However, it should be apparent that the present teachings may be practiced without such details. In other instances, well known methods, procedures, components, and/or circuitry have been described at a relatively high-level, without detail, in order to avoid unnecessarily obscuring aspects of the present teachings.

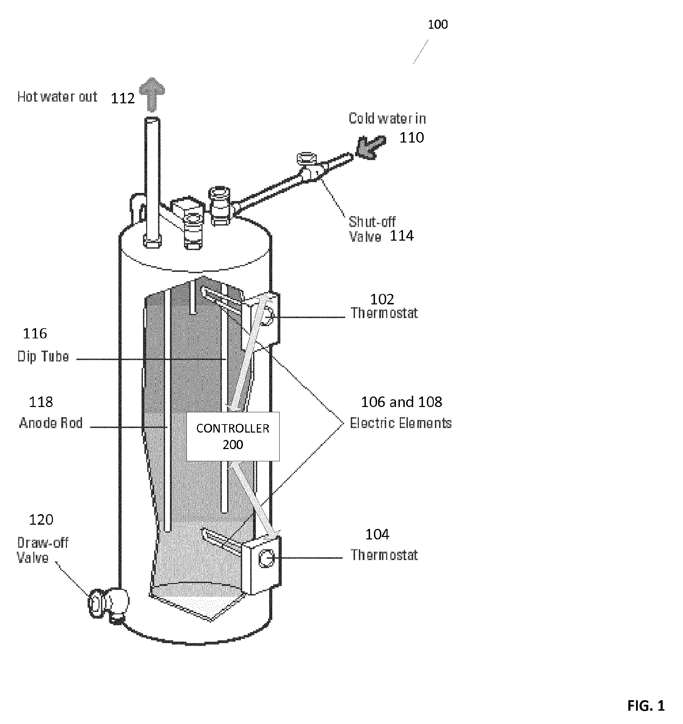

Shown in Fig. 1 is a diagram of an electric water heater that includes an upper thermostat 102 for controlling the upper primary electric heating element 106, lower thermostat 104 for controlling the lower primary electric heating element 108, cold water intake 110, hot water output 112, shut-off valve 114, dip tube 116, anode rod 118 and draw-off valve 120. During the operation, cold water is input to the tank through cold water input 110. As the cold water fills the tank, both the upper thermostat 102 and lower thermostat 104 monitor the temperature of the sidewall of the tank. The temperature of the sidewall of the tank generally corresponds to the temperature of the water in the tank. Each of the upper and lower thermostats 102 and 104 has a manual dial for manually setting a dial setpoint temperature in the upper and lower portion of the tank, respectively. This dial may be physically turned by user to any temperature.

If during operation, the upper thermostat 102 determines that the water in the tank is below the dial setpoint temperature, then upper thermostat 102 turns ON upper primary electric heating element 106 to heat the water at the top of the tank. Likewise, if during operation lower thermostat 104 determines that the temperature within the tank is lower than the dial setpoint temperature, then lower thermostat 104 turns ON lower primary electric heating element 108 to heat the water in the bottom of the hot water tank. In either case, the hot water is output through hot water pipe 112 into the home or business in order to deliver hot water to the users.

The dial setpoint temperature on both upper thermostat 102 and lower thermostat 104 is generally set by a user manually turning the dial on the thermostat. A bi-metal element within upper thermostat 102 and lower thermostat 104 expands and contracts with the temperature of the sidewall of the tank thereby opening and closing an electric circuit that drives upper and lower primary electric heating elements 106 and 108 respectively.

One such thermostat used to control an electric element water heater is called a snap-disk thermostat. As described above, water temperature inside an electric element storage tank type water heater is determined by the tank wall temperature local to the snap-disk thermostat. The user manually turns a dial on each thermostat to set the dial setpoint temperature for each electric element on the tank. Inside each thermostat, a bi-metal element physically expands or contracts based on the sensed temperature. When below the dial setpoint temperature, the bi-metal element contracts until the shape of the domed disk snaps into a concave form and closes an electric switch to turn the primary heating element ON. When above the dial setpoint temperature, the bi-metal element expands and snaps the domed disk into a convex shape, thus opening the electric switch to turn the primary heating element OFF.

A similar type of bi-metal thermostat could also be used to control home furnaces. These thermostats sometimes include a "heat anticipator resistor" mounted inside the thermostat close to a coiled bi-metal element. The anticipator resistor generates additional heat near the coiled bi-metal element, thereby shutting the furnace OFF before the air inside the room of the thermostat actually reaches the dial setpoint temperature. During operation, electric current controlling the furnace also travels through this anticipator resistor, which generates heat and warms the coiled bi-metal element so that it snaps and turns the heater OFF. In other words, the anticipator resistor artificially heats the coiled bi-metal element in order to turn the furnace OFF early to give the heat generated by the furnace time to reach the thermostat. However, the anticipator resistor is not electronically controllable to set a desired controller setpoint temperature different from the dial setpoint temperature manually set on the thermostat.

Both conventional water heater thermostats and home furnace thermostats can benefit from electronic control. Fitting each of these conventional thermostats with an electronically controllable heating element (within the thermostat) allows a user to remotely and automatically control the water heater or furnace (or any thermostat controlled device) to operate at a desired controller setpoint thermostat temperature different from the manually set dial setpoint.

A solution is shown in FIG. 1, where a water heater implements an electronic controller 200 which is electrically connected to both upper thermostat 102 and lower thermostat 104. Controller 200 is able to control various components (described in later figures) that are also housed within upper thermostat 102 and lower thermostat 104.

During operation of the water heater, the user initially turns both the upper thermostat 102 and the lower thermostat 104 dials to a dial setpoint temperature (often the maximum allowable temperature setting) on the manual thermostat dials. Thus, both upper and lower electric elements 106 and 108 are turned ON, and attempt to heat the water to its maximum dial setpoint temperature set on the dial.

However, controller 200 is able to intervene and automatically control both upper thermostat 102 and lower thermostat 104 to turn OFF the upper and lower primary electric heating elements 106 and 108 in the water heater prior to reaching the dial setpoint maximum temperatures set on the respective dials. This configuration effectively allows controller 200 to set the water within the tank at any temperature (i.e. controller setpoint temperature) that is less than or equal to the maximum dial setpoint temperature set on the dials of upper thermostat 102 and lower thermostat 104.

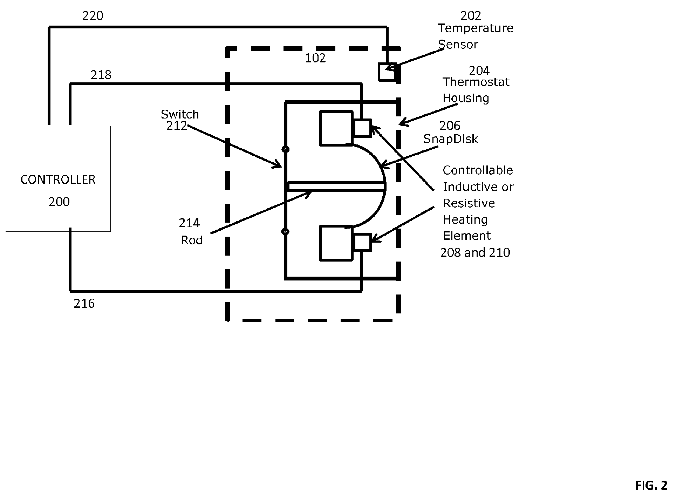

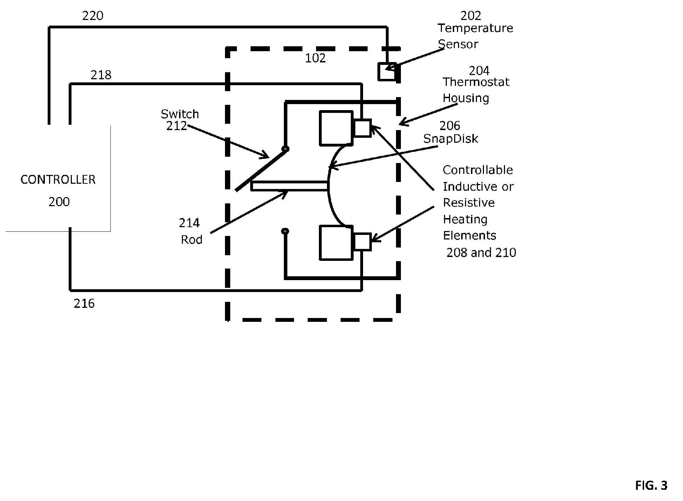

For example, both upper thermostat 102 and lower thermostat 104 may be manually set at the maximum dial setpoint temperature of 150°F. However, a desired controller setpoint temperature (e.g., 120°F) may be set by a user by programming this desired controller setpoint temperature into controller 200. During operation, as both primary electric heating elements 106 and 108 heat up, the water temperature rises. If the controller does not intervene, then the water temperature actually reaches the maximum dial setpoint temperature of 150°F set manually on the upper and lower thermostat dials. However, the controller 200 intervenes and shuts OFF both upper and lower primary electric heating elements 106 and 108 when the water temperature sensed by controller 200 reaches the desired controller setpoint temperature of 120°F. Details of the operation of controller 200 with respect to the additional components added within upper thermostat 102 and lower thermostat 104 are described in more detail with reference to Figs. 2 and 3 below.

Shown in Fig. 2 is a block diagram of controller 200 controlling upper thermostat 102. Lower thermostat 104 has been left out of the diagram for simplicity. However, it should be noted that lower thermostat 104 would include similar components to those in the upper thermostat shown in Fig. 2, and would also be electrically connected to controller 200 in a similar manner to that shown in Fig. 2.

As shown in Fig. 2, the thermostats includes a temperature sensor 202, a thermostat housing 204, a bi-metal snap disk 206, controllable thermostat heating elements 208 and 210, electric switch 212 and push rod 214 that mechanically connects the bi-metal element 206 to the electrical switch 212. It should be noted that the push rod 214 may not be needed (i.e. the bi-metal snap disk 206 may come into direct contact with the electric switch 212).

Also included in Fig. 2 is controller 200, and electrical connections 216, 218 and 220 which electrically connect controller 200 to the thermostat heating elements and the sensor. It should be noted that electrical switch 212 shown in Fig. 2 is the power switch (e.g. mechanical switch) that turns ON and OFF the electric power to the primary electric heating elements 106 and 108 shown in Fig. 1.

As noted above, the user of the hot water tank initially turns the manual dial on the thermostat to the maximum dial setpoint temperature. This means that during operation, that snap disk 206 only pops open electrical switch 212 to turn OFF the heaters when the water in the tank reaches the maximum dial setpoint temperature set on the dial. However, as shown in Fig. 2, the thermostat includes additional components (i.e., thermostat heating elements 208 and 210, and temperature sensor 202) which allow controller 200 to automatically control the thermostat to turn ON and OFF the primary electric heating elements at any desired controller setpoint temperature that is programmed into the controller (e.g. a temperature that is less than or equal to the maximum dial setpoint temperature set on the dial).

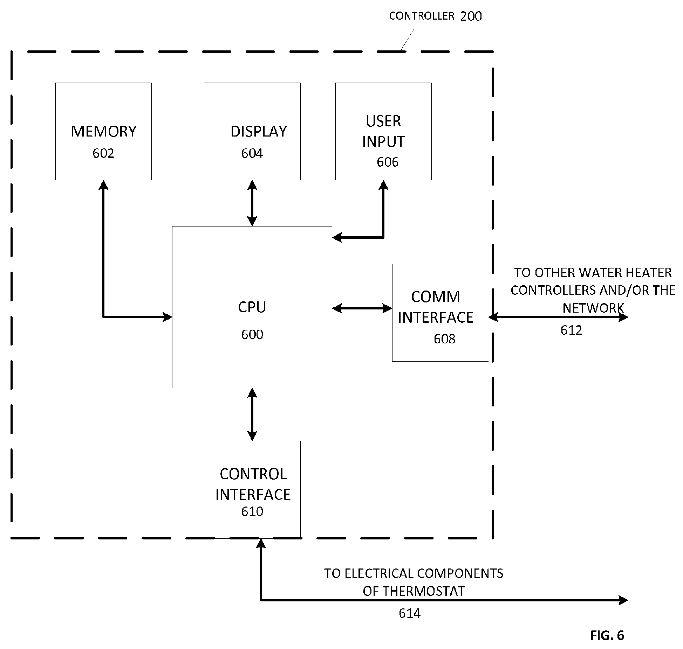

During operation, a user programs a desired controller setpoint temperature into controller 200. This programming may be manually performed via an input interface such as a keypad or may be performed remotely via communication with an external device such as a Smartphone. Details of setting such values are discussed below with respect to Fig. 6.

In any event, once the desired controller setpoint temperature is programmed into controller 200, controller 200 begins to monitor the temperature within thermostat 102 utilizing temperature sensor 202. Temperature sensor 202 may be a temperature sensing device such as a thermistor or any other equivalent electronic device that allows controller 200 to determine the temperature within the housing of thermostat 102. Since the water in the tank is not at the maximum dial setpoint temperature set on the dial, the snap disk 206 maintains switch 212 in an electrically closed position as shown in Fig. 2. This allows electric current to flow through the primary electric heating element within the hot water tank to heat the water.

Assuming the desired controller setpoint temperature set in controller 200 is 120°F, the controller would determine when the hot water within the tank has reached the desired controller setpoint temperature via temperature sensor 202. Once it is determined by controller 200 that the water in the tank has reached the desired controller setpoint temperature of 120°F, controller 200 controls the thermostat heating elements 208 and 210 (which may be both resistive or inductive heating elements) to begin heating the inside of the thermostat (not the water). As thermostat heating elements 208 and 210 heat the inside of the thermostat, the inside of the thermostat eventually reaches the maximum dial setpoint temperature of 150°F set on the dial. Once the maximum dial setpoint temperature of 150°F is reached, the snap disk snaps from a concave to a convex form, thereby popping open electrical switch 212 and shutting OFF the primary electric heating element to the water heater. The electrical switch being popped open to shut OFF the primary electric heating elements within the water heater is shown in Fig. 3 where snap disk 206 has a convex form. The thermostat heating element is preferably designed to heat the bi-metal element to a temperature equal to or greater than the maximum dial setpoint. The thermostat heater algorithm detects the discontinuation of power to the water (or space) heating element. Power will be held at a level needed to assure the water heating element remains off until the water temperature cools to user set point minus a differential. The exact temperature of the bi-metal element is not important; only that it is hot enough to assure the bimetal thermostat is satisfied and the water heating element is not powered. A software algorithm is configured to search for the appropriate power level required to assure the bimetal element is hot enough to keep the water heating (or space heating) element in the desired state (de-energized).

Thus, the controller 200 actually forces the temperature within the thermostat (not the temperature in the tank) to reach the maximum dial setpoint temperature of 150°F manually set on the thermostat dial. This essentially tricks the thermostat into thinking that the water in the tank has reached the maximum dial setpoint temperature of 150°F thereby turning OFF the water heater. However, the temperature of the water heater has not actually reached the maximum dial setpoint temperature. The temperature of the water heater has only reached the desired controller setpoint temperature of 120°F. The thermostat heating elements controlled by controller 200 heat the inside of the thermostat, but not the actual water within the tank. Thus, the water of the tank never reaches the maximum dial setpoint temperature of 150°F, but rather turns OFF at the desired controller setpoint temperature programmed into controller 200. It is noted that this desired controller setpoint temperature can be any temperature that is less than or equal to the maximum dial setpoint temperature manually set on the dial of the thermostat.

Once the electrical switch 212 is opened, the temperature in the hot water tank eventually begins to decrease over time. A temperature sensor 202 continuously monitors (i.e. senses) the temperature within the tank. Once temperature sensor 202 determines that the temperature of the water in the tank has gone below the desired controller setpoint temperature by a predetermined amount (e.g. 10 degrees of temperature), then the controller 200 turns OFF the thermostat heating elements 208 and 210 thereby allowing snap disk 206 to cool OFF, and thereby allowing it to snap back to its concave form and close electric switch 212. Once electric switch 212 is closed, an electric power is applied to the primary electric heating element, thereby increasing the temperature of the water in the tank.

Although not shown, it should be noted that temperature sensor 202 is thermally isolated from thermostat heating elements 208 and 210 within the thermostat. Thermal isolation is beneficial since the heat produced by thermostat heating elements 208 and 210 does not affect the temperature sensed by temperature sensor 202. Temperature sensor 202 only detects the true temperature of the sidewall of the tank which corresponds to the water temperature in the tank. Such thermal isolation can be achieved by an insulated wall within the thermostat that isolates temperature sensor 202 from the thermostat heating elements 208 and 210. Thus, only the snap disk is affected by the heat produced by thermostat heating elements 208 and 210 (not the sensor). The sensor is able to measure the true temperature of the water in the tank.

During operation, the controller 200 cycles ON/OFF the thermostat heating elements 208 and 210 depending on the temperature measured by temperature sensor 202. When a temperature measured by temperature sensor 202 indicates that the water in the tank is too cold, then the thermostat heating elements 208 and 210 are turned OFF, thereby allowing electric switch 212 to close and heat the water in the tank. However, when temperature sensor 202 indicates that the temperature of the water in the tank has reached the desired controller setpoint temperature, then controller 200 turns ON the thermostat heating elements 208 and 210, thereby heating up snap disk 206 and popping open switch 212 and turning OFF the heating elements within the hot water tank.

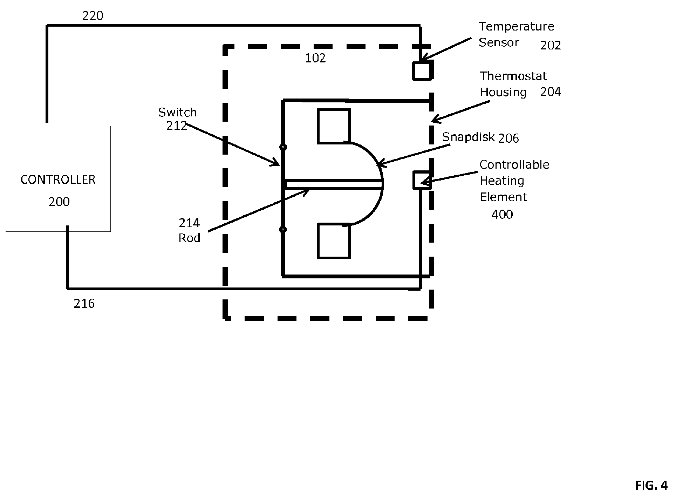

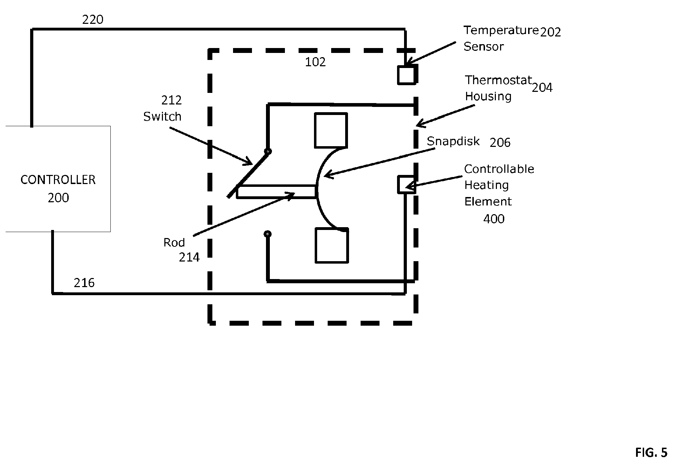

Although Figs. 2 and 3 show that the thermostat heating elements 208 and 210 are mounted on either side of the snap disk 206, it is noted that other configurations, including single heating element configurations (see Figs. 4 and 5) for the thermostat are possible. These single thermostat heating element embodiments are least shown in Figs. 4 and 5 where the thermostat only includes one heating element (e.g. inductive or resistive). The single heating element thermostats in Figs. 4 and 5 operate similarly to the double heating element thermostats shown in Figs. 2 and 3.

For example, Figs. 4 and 5 are diagrams that show thermostat 102 with a single thermostat heating element. This thermostat heating element may be an inductive or resistive heating element 400. In the case of an inductive heating element, the inductive heating element 400 may be a coil that is mounted within a thermostat housing 204. This inductive heating element 400 is mounted in close proximity to snap disk 206. This allows the inductive heating element 300 to induce electric current (e.g. Eddy Currents) flowing through snap disk 206. Thus, during operation the controller circulates a current through the inductive heating element 400. This induces, via electromagnetic waves, a current that circulates through snap disk 206. This induced electric current causes snap disk 206 to heat up through induction. Eventually snap disk 206 heats up to a dial setpoint temperature that forces the snap disk to snap from the concave position shown in Fig. 4 to the convex position shown in Fig. 5. It should be noted that this inductive heating element 400 can be mounted anywhere within proximity to snap disk 206, such as on a sidewall of the thermostat housing as shown in Fig. 4.

Likewise, if the single heating element is resistive, the controller 200 supplies a current through resistive heating element 400. This electric current forces resistive heating element 400 to produce heat thereby heating inside of the thermostat through conduction and/or convection. This heat causes snap disk 206 to heat up to the maximum dial setpoint temperature and snap from the concave position shown in Fig. 4 to the convex position shown in Fig. 5 thereby opening electric switch 212 and turning OFF the primary heating elements within the hot water tank. The resistive heating element may be mounted anywhere within the thermostat 102 including onto the inner portion of the thermostat housing 204. It should also be noted that multiple resistive heating elements may be mounted within a thermostat housing 204 and anywhere in proximity to the snap disk 206.

The controller that is shown in Figs. 1-5 for controlling the thermostat is shown in more detail in Fig. 6. Specifically, Fig. 6 shows that controller 200 includes CPU 600 (e.g., a microprocessor), a memory device 602 (e.g., RAM/ROM), a display 604 (e.g. LCD display), user input 606 (e.g., keypad, touch screen, etc.), communication interface 608 (e.g., internet connection, Bluetooth transceiver, etc.) and a control interface 610 (e.g., electrical wire connections).

During operation, the desired controller setpoint temperature of the hot water tank may either be input manually through a user input 606 (e.g., the user types in a desired controller setpoint temperature on the keypad) or may be received as an instruction through communication 608 (e.g., a communication message indicates the desired controller setpoint temperature). It should be noted that the communication interface 608 allows the controller 200 to connect possibly to other hot water controllers and to other components on a network via communication line 612. Communication line 612 may be a hardwire connection or a wireless connection to these other devices. For example, in one embodiment communication interface 608 may be either hardwired or wirelessly connected to a wireless access point within a home or business. This allows the CPU to communicate with the wireless access point via the communication interface 608 and communication line 612. This also allows CPU 600 to communicate with the wireless access point and over the network to other devices such as mobile phones and other computers.

Wires 216, 218 and 212 that are shown in both Figs. 2 and 3, among other wires, are shown as 614 in Fig. 6 which connect the various electrical components of the thermostat to the CPU 600 via control interface 610. Control interface 610 may include hardwired terminals that allow a technician or a homeowner to connect electrical wires of a thermostat to the control interface 610 of controller 200.

In a first embodiment, the controller 200 may be connected to a hot water tank within a user's residence. The user may then input a desired controller setpoint temperature via user input 606. This desired controller setpoint temperature may be displayed in display 604 to confirm that the desired controller setpoint temperature has been programmed into controller 200. This desired controller setpoint temperature is generally be stored in memory 602 which is accessible by CPU 600. During operation, a CPU 600 receives an electrical signal from the temperature sensor within the thermostat via control line 614 and control interface 610. CPU 600 also sends out control signals and power signals to turn ON/OFF the thermostat heating elements that are in the controller via interface 610 and control lines 614.

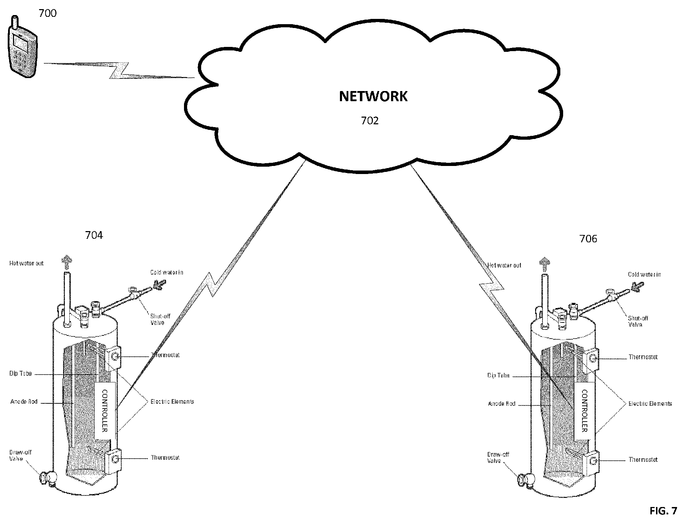

Remote control of multiple water heaters is shown in Fig. 7. Specifically, water heaters 100 (which may or may not be located in different locations, e.g., different residences or businesses), are connected to network 702 via the communication interface shown in Fig. 6. Network 702 is also connected wirelessly to a mobile phone (e.g., Smartphone) 700. In one example, assuming that a user has water heater in his residence and a second water heater in his business, the user may wish to control each water heater separately to shut OFF at a different desired controller setpoint temperatures. Thus, the user may access a mobile application on the Smartphone 700. The user may select the first water heater in the residence and set the desired controller setpoint temperature. This communication is sent through network 702 and to controller 200 via the communication interface. Controller 200 then controls the upper and lower thermostats as usual to shut OFF the water heater at the desired controller setpoint temperature. The user may then select the second hot water tank in the user's business and set the desired controller setpoint temperature. This desired controller setpoint temperature is transmitted through network 702 to controller 200 via a communication interface. The controller then controls the business water heater based on the desired controller setpoint temperature received.

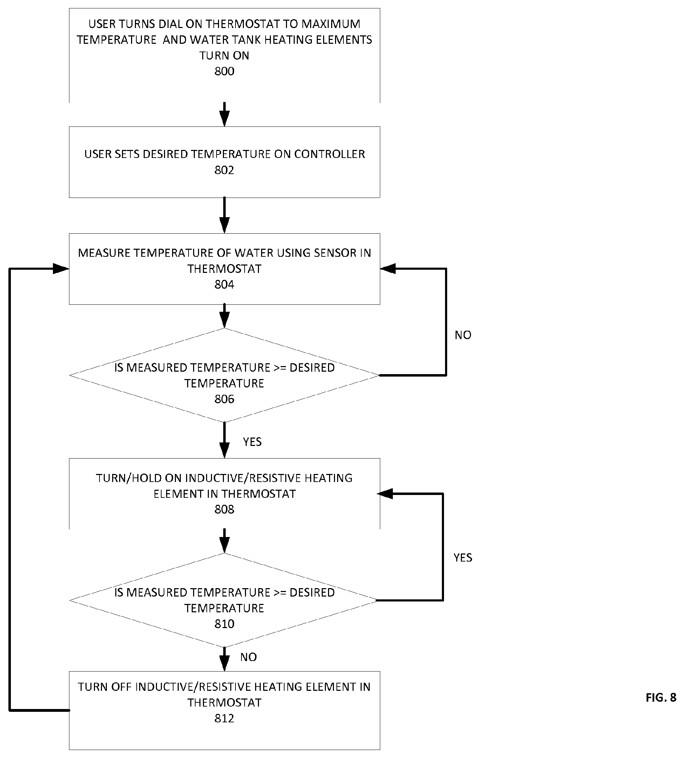

Shown in Fig. 8 is a flowchart that describes the overall control of the water heater from the initial manual setting to the automatic control by controller 200. In a first step 800, the user manually turns the dial on the temperature of the thermostat. This dial is turned all the way to the maximum temperature (i.e. dial setpoint temperature) that the dial allows. In step 802, the user then sets a desired controller setpoint temperature on controller 200. Steps 804-812 describe how the controller automatically controls the water heater to reach and maintain this desired controller setpoint temperature selected by the user.

Specifically, in step 804 the controller measures the temperature of the water using the temperature sensor shown in Figs. 2 and 3. In step 806, the controller then determines if this measured temperature is greater than or equal to the desired controller setpoint temperature set by the user. If the answer to this question is NO, then the controller 200 continues to monitor the temperature of the water using the temperature sensor. However, if the answer to this question is YES, then in step 808 the controller 200 turns ON the thermostat heating element to heat up the snap disk within the thermostat. In step 810, controller 200 then determines once again if the measured temperature is greater than or equal to the desired controller setpoint temperature set by the user. If the answer to this question is YES (i.e., the water tank has reached the desired controller setpoint temperature) controller 200 continues to hold ON the thermostat heating elements in step 808. However, if the answer to this question is NO (i.e., the water tank has not reached the desired controller setpoint temperature or has dropped below the desired controller setpoint temperature), then in step 812 the controller 200 turns OFF the thermostat heating elements, thereby allowing a snap disk to cool OFF and turn back ON the primary electric heating elements within the hot water tank. The system then goes back to step 804 and continues to measure the temperature of the water in the tank.

Thus, the system described above allows the controller to turn ON the thermostat heating elements to trick the thermostat into turning OFF the primary electric heating elements within the tank prior to the water in the tank actually reaching the maximum dial setpoint temperature. This allows controller 200 to turn OFF the thermostat and therefore turn OFF the water heating element at any desired controller setpoint temperature that is less than or equal to the maximum dial setpoint temperature manually set on the dial of the thermostat.

It should be noted that the electric components (e.g. sensor, thermostat heating elements, etc.) within the thermostat may fail. In case of a failure, the thermostat returns to the standard mode of operation where the water is heated to the dial setpoint temperature manually set on the thermostat dial. If a failure occurs, the controller may post an alert on the display to let the user know that the system has failed. The user then has to manually control the thermostat in the conventional method to obtain the desired water temperature (e.g. the dial has to be manually set to the desired temperature).

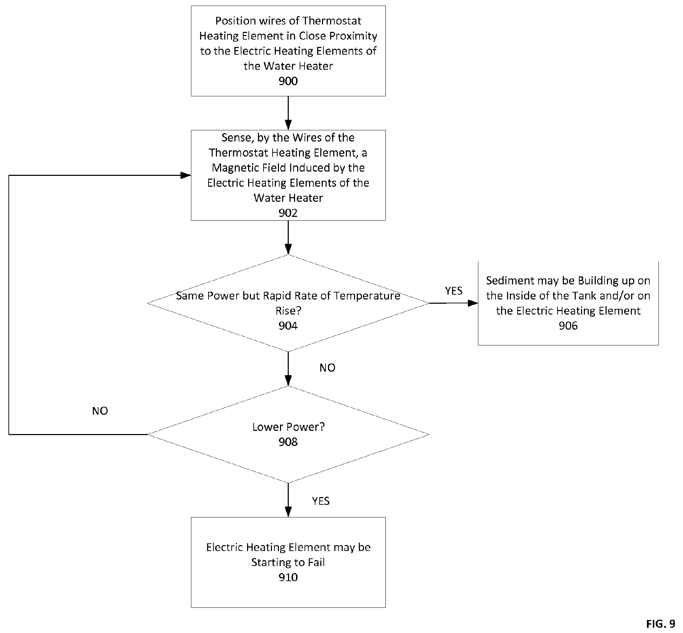

In addition to automatically controlling the water heater, the controller is also able to detect the status of the primary electric heating elements in the water heater. This feature is described in the flowchart of Fig. 9. In step 900, the wires (e.g. wires 216 and 218) of the thermostat heating element are positioned within close proximity to the power lines (i.e. wires connected to switch 212) for supplying power to the primary electric heating elements 106 and 108. In step 902, the wires of the thermostat heating element sense the presence or lack of a magnetic field produced by electric current flowing through the power lines (i.e. a magnetic field is produced in the when current flows through the power lines). In step 904, the controller determines if the power (based on the strength magnetic field) stays the same during a rapid rise in temperature. If the answer to this question is YES, then the controller (step 906) concludes that sediment may be building up within the walls of the tank and/or on the primary electric heating elements 106 and 108. If the answer to this question is NO, then the controller (step 908) determines if the power flowing through the power lines is too low. If the answer to this question is YES, then the controller (step 910) concludes that the primary electric heating elements may be starting to fail. If the answer to this question is NO, then the controller determines that the water heater is operating properly, and continues to monitor the electric current flowing through the power lines (step 902).

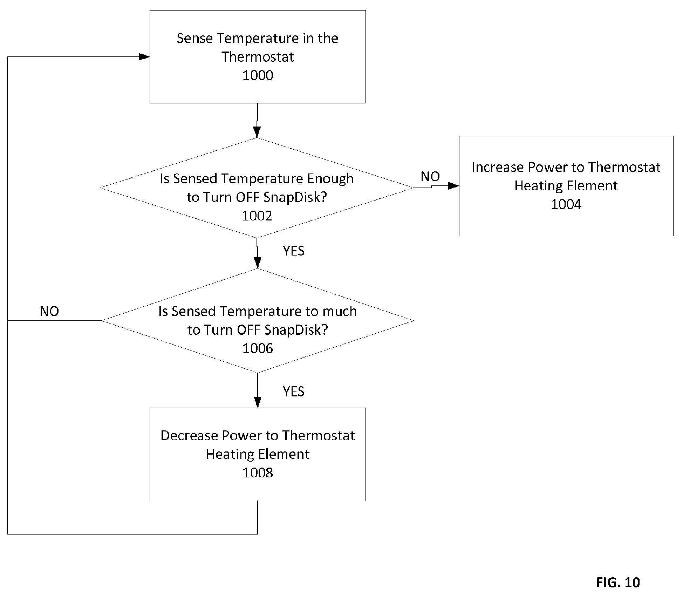

In addition to detecting the status of the primary electric heating elements in the water heater, the controller is also able to determine and control the efficiency of the thermostat heating elements. This feature is described in the flowchart of Fig. 10. In step 1000, the controller senses the temperature in the thermostat. This sensing may be performed by an additional temperature sensor (not shown) positioned in proximity to the thermostat heating elements. In step 1002 the controller determines if the temperature is high enough to properly turn OFF the snap disk thermostat. If the answer to this question is NO, then the controller increases the power supplied to the thermostat heating elements (step 1004) to increase the heat in the thermostat. If the answer to this question is YES, then the controller determines if the temperature is too excessive. If the answer to this question is YES, then the controller decreases the power to the thermostat heating elements (step 1008) to save power and make the thermostat run efficiently (i.e. just enough power is supplied to the thermostat heating elements). If the answer to this question is NO, then the controller determines that the thermostat is operating efficiently, and continues to monitor the temperature in the thermostat (step 1000).

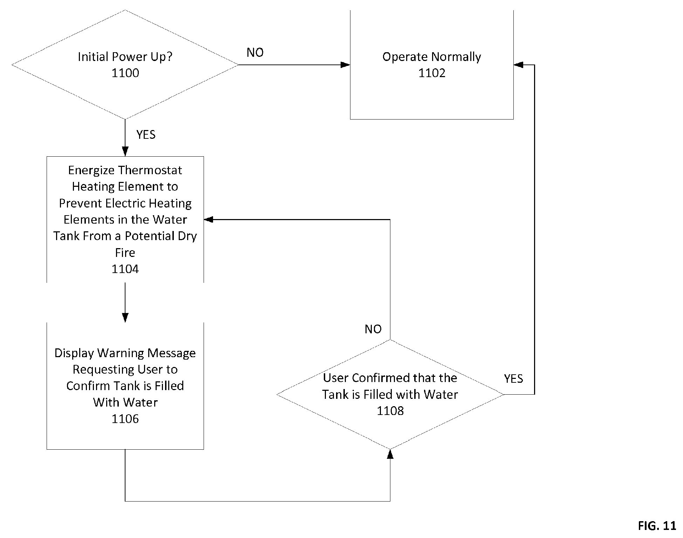

In addition to determining and controlling the efficiency of the thermostat heating elements, the controller is also able to protect the water heater from damage during a dry fire (i.e. turning ON the primary electric heating elements when there is no water in the tank). This feature is described in the flowchart of Fig. 11. In step 1100 the controller determines if the water tank is going through initial power up (e.g. after installation). If the answer to this question is NO, then the controller operates normally (1102). However, if the answer to this question is YES, then the controller energizes the thermostat heating element to make the thermostat reach the dial setpoint temperature (e.g. the maximum temperature), thereby preventing the main heating elements of the water heater from being turned ON (step 1104). After step 1104, the controller then displays a warning message to the user to make sure the tank has water (1106). If in step (1108) the user confirms that the water tank is filled with water (e.g. by purging the air in the plumbing system and then pushing a confirmation button on the controller), the system operates normally. However, in step (1108), the user does not confirm that the water tank is filled, then the system continues energize the thermostat heating elements until receiving the user's confirmation (i.e. the water tank will not turn ON until the user confirms the presence of water).

Although it is shown in Figs. 1-5 and 7 that controller 200 is mounted remote from the actual thermostats, it is also contemplated that the controller can actually be mounted within a common housing of the thermostat. The controller can essentially be mounted in the thermostat or anywhere remote to the thermostat as long as it is electrically connected to the electronic components within the thermostat. For example, the controller can be mounted on the first floor of a residence next to a standard furnace thermostat. This allows the user to set the desired controller setpoint temperature of the water without having to go into the basement or garage.

Although Figs. 2-5 show embodiments in which switch 212 is in a normally closed position (e.g., when heat is not applied by thermostat heating elements 208 and 210, snap disk 206 keeps switch 212 closed), it is contemplated that switch 212 could be configured in a normally opened position (e.g., when heat is not applied by thermostat heating elements 208 and 210, snap disk 206 keeps switch 212 open). In this normally opened configuration, when heated by thermostat heating elements 208 and 210, snap disk 206 snaps over and closes the switch 212 that powers the heating elements (e.g., snap disk 206 is normally in a convex position as shown in Fig. 3 holding switch 212 open, and then when heated, snap disk 206 snaps to a concave position as shown in Fig. 2 to close switch 212). An advantage of this method is that elements remain de-energized until the snap disk is heated above some predetermined temperature.

With this method, the user of the water heater is not required to turn a manual dial on the thermostat. The thermostat may actually be designed without a manual dial. Rather than using a manual dial, the snap disk is designed to snap over at a predetermined temperature that is greater than the highest contemplated user setpoint temperature. For example, the snap over temperature may be set at a value above the boiling point of water (e.g. 212°F) to ensure that all setpoints can be safely achieved by the water heater. Water temperature is monitored electronically, and the heating element power is applied if the thermostat heating element is energized to heat the snap disk above the snap-over temperature.

It should be noted that the snap-disk snap-over point can easily be set to a temperature that is well above the maximum temperature contemplated for hot water. For example, the snap point could be 260°F to actuate the disk and 240°F for the disk to relax and snap back to "cold" steady state condition.

Once electrical switch 212 is opened, the temperature in the water tank eventually begins to decrease over time. A temperature sensor 202 continuously monitors the temperature within the tank. Once temperature sensor 202 determines that the temperature of the water in the tank has gone below the desired controller setpoint temperature by a predetermined amount (e.g., 10°F), then the controller 200 turns ON the thermostat heating elements 208 and 210 thereby allowing snap disk 206 to heat up, and snap back to once again close electric switch 212. Once electric switch 212 is closed, an electric power is again applied to the primary electric heating element, thereby increasing the temperature of the water in the tank.

It will be appreciated that this method of heating the disk to close contacts and power the heating element(s) can simplify the water heater in various respects. For example, it causes the snap-disk assembly to act in a manner similar to a relay, except that the actuation power comes from heating a bimetal to a high temperature.

Although the description above describes control of an electric fired water heater, it is contemplated that other water heaters can be controlled similarly. For example, a gas burning water heater that has a snap-disk thermostat could also be controlled with the devices and methods described above. For example, the snap-disk thermostat could control electric power to an electric gas valve that releases gas to a gas burner located at the bottom of the water tank. By opening and closing the valve, the controller can effectively control the water heater.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a" or "an" does not, without further constraints, preclude the existence of additional identical elements in the process, method, article, or apparatus that comprises the element.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A thermostat comprising:
a bi-metal element configured to be activated at a maximum dial setpoint temperature manually set on the thermostat;
a switch coupled to the bi-metal element and configured to open upon activation of the bi-metal element;
a temperature sensor positioned to sense temperature;
a thermostat heating element positioned to heat the bi-metal element to the maximum dial setpoint temperature; and
a controller coupled to the temperature sensor and the thermostat heating element, and storing a desired controller setpoint temperature;
wherein in response to determining that the desired controller setpoint temperature is sensed, the controller controls the thermostat heating element to heat the bi-metal element to the maximum dial setpoint temperature, thereby activating the bi-metal element and opening the switch.

2. The thermostat of claim 1,
wherein the thermostat heating element is at least one of a resistive heating element or an inductive heating element.

3. The thermostat of claim 1, further comprising
a user input device coupled to the controller for setting the desired controller setpoint temperature.

4. The thermostat of claim 1,
wherein the thermostat heating element is mounted within the thermostat at a predetermined location to assure optimal heating of the bi-metal element.

5. The thermostat of claim 1,
wherein the thermostat temperature sensor is mounted within the thermostat at a predetermined location that reduces impact of heat generated by the heating element and increases ability to accurately sense side wall temperature of a water tank.

6. The thermostat of claim 1, including
at least one other thermostat heating element positioned to heat the bi-metal element to the maximum dial setpoint temperature, the thermostat heating element and the other thermostat heating element being configured to operate in conjunction to heat the bi-metal element to the maximum dial setpoint temperature.

7. The thermostat of claim 1,
wherein the controller is configured to determine at least one of an operational status of primary electric heating elements in a hot water tank or operational efficiency of the thermostat heating elements.

8. A water heater, the water heater comprising:
a water storage tank;
a means for heating water within the water storage tank; and
a thermostat coupled to the water heating means , the thermostat including:
a bi-metal element configured to be activated at a maximum dial setpoint temperature manually set on the thermostat;
a switch coupled to the bi-metal element and configured to open upon activation of the bi-metal element;
a temperature sensor positioned to sense temperature of the water tank;
a thermostat heating element positioned to heat the bi-metal element f to the maximum dial setpoint temperature; and
a controller coupled to the temperature sensor and the thermostat heating element and storing a desired controller setpoint temperature of the water in the water tank;
wherein in response to determining that the desired controller setpoint temperature is sensed, the controller controls the thermostat heating element to heat the bi-metal element to the maximum dial setpoint temperature, thereby activating the bi-metal element and opening the electric switch to turn OFF the water heating means.

9. The water heater of claim 8,
wherein the thermostat heating element is at least one of a resistive heating element or an inductive heating element.

10. The water heater of claim 8,
wherein the controller is mounted to the thermostat during manufacture of the thermostat.

11. The water heater of claim 8,
wherein the controller is mounted remote from the thermostat and is electrically coupled to the thermostat by electrical wires.

12. The water heater of claim 8, further comprising
at least one other thermostat coupled to at least one other water heating means, , the at least one other thermostat including:
another bi-metal element configured to be activated at the maximum dial setpoint temperature manually set on the at least one other thermostat;
another switch coupled to the other bi-metal element and configured to open upon activation of the other bi-metal element;
another temperature sensor positioned to sense temperature of the water tank; and
another thermostat heating element positioned to heat the other bi-metal element to the maximum dial setpoint temperature,
wherein the controller is coupled to the other temperature sensor and the other thermostat heating element, and in response to determining that the desired controller setpoint temperature is sensed by the other sensor, the controller controls the other thermostat heating element to heat the other bi-metal element to the maximum dial setpoint temperature, thereby activating the other bi-metal element and opening the other switch to turn OFF the other water heating means.

13. The water heater of claim 8,
wherein the controller is configured to control a plurality of thermostats on a plurality of water heaters.

14. The water heater of claim 8,
wherein the controller is configured to:
turn ON the thermostat heating element to heat the bi-metal element to the maximum dial setpoint temperature, thereby activating the bi-metal element and opening the electric switch to turn OFF the water heating means when it is detected that the water heater is powered up for the first time, and then
turn OFF the thermostat heating element when it is detected that the controller has received an instruction from a user indicating that water is in the water tank.

15. The water heater of claim 8,
wherein the water heating means includes one of an electric heating element, a fuel fired burner, and a heat exchanger.

16. A method for controlling the temperature of water in a water heater, the method comprising:
monitoring, by a sensor, temperature corresponding to temperature of the water in the water heater;
actuating, by a controller, a thermostat heating element to heat a bi-metal element to a pre-determined setpoint temperature to activate the bi-metal element housed in a thermostat, based on a desired controller setpoint temperature;
opening or closing, by the thermostat, a switch upon activation of the bi-metal element; and
wherein based on the desired controller setpoint, the controller controls the thermostat heating element to heat the bi-metal element to the pre-determined setpoint temperature, thereby activating the bi-metal element and opening or closing the switch to turn OFF the water heater or to turn ON the water heater.

17. The method of claim 16, including
receiving, by a user input device, the desired controller setpoint temperature selected by the user.

18. The method of claim 16, including
determining, by the controller, an operational status of primary electric heating elements in the water heater based on a magnetic field induced on wires connected to the thermostat heating elements.

19. The method of claim 16,
determining, by the controller, an efficiency of the thermostat heating elements, and controlling, by the controller, electric power supplied to the thermostat heating elements based on the determined efficiency.

20. The method of claim 16, including
monitoring, by another sensor, temperature corresponding to temperature of the water in the water heater;
actuating, by the controller, another thermostat heating element to heat another bi-metal element to another pre-determined setpoint temperature of the other bi-metal element; and
opening, by the other thermostat, another switch upon activation of the other bi-metal element,
wherein in response to determining that the desired controller setpoint temperature is sensed, the controller controls the other thermostat heating element to heat the other bi-metal element to the pre-determined setpoint temperature set on the other thermostat, thereby activating the other bi-metal element and opening the other switch to turn OFF the water heater.

21. The method of claim 16, including
actuating, by the controller, the thermostat heating element to heat the bi-metal element to the pre-determined setpoint temperature set on the thermostat that houses the bi-metal element prior to the sensor sensing that the water in the water tank has reached the desired controller setpoint temperature.

22. The method of claim 16, including
in response to determining that the temperature of the water in the tank is less than the desired controller setpoint temperature, the controller controls the thermostat heating element to heat the bi-metal element to the pre-determined setpoint temperature set on the thermostat, thereby activating the bi-metal element and closing the switch to turn ON the water heater, or
in response to determining that the temperature of the water in the tank is greater than or equal to the desired controller setpoint temperature, the controller turns OFF the thermostat heating element to allow the bi-metal element to cool, thereby deactivating the bi-metal element and opening the switch to turn OFF the water heater.
